# EUROPEAN PATENT APPLICATION

(11) **EP 1 365 392 A2**
(43) Date of publication of application: **26.11.2003**
(21) Application number: 02256278.9
(22) Date of filing: 11.09.2002
(51) Int. Cl.: G11B 7/007, G11B 7/0055

(54) **Optical recording medium**

(30) Priority: 20.05.2002 KR 2002027928
(71) Applicant: SAMSUNG ELECTRONICS CO., LTD., Suwon-City, Kyungki-do (KR)
(72) Inventor: Lee, Kyung-geun 112-1002 Sibeom Hanshin Apt., Seongnam-si, Gyeonggi-do (KR); Ahn, Yong-jin 107-303 Wooseong Apt., Seoul (KR); Park, In-sik, Paldal-gu Suwon-si Gyeonggi-do (KR); Kim, Seong-sue 203-404 Kumho Samsung Raemian Apt., Seoul (KR); Yoon, Du-seop 110-1901 LG Samick Apt., Suwon-si Gyeonggi-do (KR)
(74) Representative: Chugg, David John

(57) **Abstract**

An optical recording medium storing information about powers of an erase pulse is provided. The optical recording medium allows data to be recorded on, erased from, and reproduced from. In the optical recording medium, erase pattern information including information about power levels of start and last pulses of an erase pattern for erasing data is recorded. The start and last pulses of the erase pattern that can be differently set depending on kinds of recording layers of disks, kinds of disks, or each layer of a multi-layered recording layer are recorded in a reproducible only area of the optical recording medium. Thus, the time required for selecting an optimal erase power for the optical recording medium in which the recording apparatus is inserted can be considerably reduced.

## Description

The present invention relates to an optical recording medium.

Recording data on an optical disk, a kind of optical recording media, means that a mark is made in a track formed on the optical disk. Currently recordable, erasable, and reproducible disks include RW-CDs of 650MB, DVDs-RAM/R/RW of 4.7GB, DVDs+RW of 4.7GB, HD-DVDs of 23GB still under development, and the like. In a rewritable disk, a recording layer is coated with a phase change layer which is changed from crystalline to amorphous according to the temperature level, and a mark is formed (according to the data required) through a phase change of the phase change layer. In such a rewritable medium, a writing strategy, according to the types of recording media, is adopted to optimize recording/reproducing characteristics. However, since recording conditions may vary from drive to drive, optical recording media may not be compatible with drives.

With a view to solve or reduce the above-described problem, it is an aim of embodiments of the present invention to provide an optical recording medium storing information about power levels of start and last pulses of an erase pattern and capable of detecting a laser optimal power level necessary for erasing data when used with any type of drive.

According to a first aspect of the present invention, there is provided an optical recording medium which allows data to be recorded on, erased from, and reproduced from, the optical recording medium in which erase pattern information including information about power levels of start and last pulses of an erase pattern for erasing data is recorded.

Preferably, the erase pattern information is recorded in a reproducible only area of a recording layer on which data is recorded.

Preferably, the erase pattern information is recorded in a recordable area of the recording layer on which data is recorded.

Preferably, the power level of the start pulse of the erase pattern is a high level of a unit pulse string and the power level of the last pulse of the erase pattern is the high level of the unit pulse string.

Preferably, the power level of the start pulse of the erase pattern is a low level of the unit pulse string and the power level of the last pulse of the erase pattern is the low level of the unit pulse string.

Preferably, the power level of the start pulse of the erase pattern is a high level of a unit pulse string and the power level of the last pulse of the erase pattern is a low level of the unit pulse string.

Preferably, the power level of the start pulse of the erase pattern is a low level of a unit pulse string and the power level of the last pulse of the erase pattern is a high level of the unit pulse string.

According to a second aspect of the invention, there is provided an optical recording medium which allows data to be recorded on, erased from, and reproduced from, the optical recording medium comprising a plurality of recording layers on which data including erase pattern information is recorded, wherein the erase pattern information includes information about power levels of start and last pulses of an erase pattern for erasing data corresponding to each of the recording layers.

Preferably, the erase pattern information about each of the plurality of recording layers is stored in one layer selected from the plurality of recording layers.

Preferably, the erase pattern information is recorded in a reproducible only area of the selected recording layer.

Preferably, the erase pattern information is recorded in a recordable area of the selected recording layer.

Preferably, the power level of the start pulse of the erase pattern is a high level of a unit pulse string and the power level of the last pulse of the erase pattern is the high level of the unit pulse string.

Preferably, the power level of the start pulse of the erase pattern is a low level of a unit pulse string and the power level of the last pulse of the erase pattern is the low level of the unit pulse string.

Preferably, the power level of the start pulse of the erase pattern is a high level of a unit pulse string and the power level of the last pulse of the erase pattern is a low level of the unit pulse string.

Preferably, the power level of the start pulse of the erase pattern is a low level of a unit pulse string and the power level of the last pulse of the erase pattern is a high level of the unit pulse string.

Preferably, the erase pattern information about each of the plurality of recording layers is respectively recorded on each corresponding recording layer.

Preferably, the erase pattern information about the plurality of recording layers is respectively recorded in reproducible only areas of each of the recording layers.

Preferably, the erase pattern information about the plurality of recording layers is respectively recorded in recordable areas of each of the recording layers.

Preferably, the power level of the start pulse of the erase pattern is a high level of a unit pulse string and the power level of the last pulse of the erase pattern is the high level of the unit pulse string.

Preferably, the power level of the start pulse of the erase pattern is a low level of a unit pulse string and the power level of the last pulse of the erase pattern is the low level of the unit pulse string.

Preferably, the power level of the start pulse of the erase pattern is a high level of a unit pulse string and the power level of the last pulse of the erase pattern is a low level of the unit pulse string.

Preferably, the power level of the start pulse of the erase pattern is a low level of a unit pulse string and the power level of the last pulse of the erase pattern is a high level of the unit pulse string.

For a better understanding of the invention, and to show how embodiments of the same may be carried into effect, reference will now be made, by way of example, to the accompanying diagrammatic drawings in which:
Figure 1 is a view showing all areas of an optical recording medium;
Figure 2 is a view showing waveforms of data and four types of erase patterns;
Figure 3 is a view of an example of a recording waveform for recording data in a data zone of the optical recording medium shown in Figure 1;
Figure 4 is a view of an example of data recorded in a pre-recorded area shown in Figure 1; and
Figure 5 is a view of an example of data recorded in the pre-recorded area shown in Figure 1 when the optical recording medium is a dual layer optical recording medium.

Hereinafter, a preferred embodiment of the present invention will be described in detail with reference to the attached drawings.

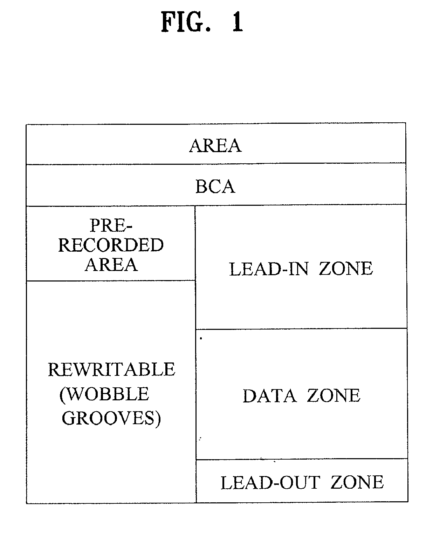

Figure 1 is a view showing all areas of an optical recording medium including a burst cutting area (BCA), a pre-recorded area, and a rewritable area. Referring to Figure 1, in the BCA, disk's own information, such as a disk number or the like, is recorded in a barcode type in a radial direction. In the pre-recorded area, reproducible only data is recorded as high frequency wobbles or pits. Data recorded in the pre-recorded area includes data types, disk sizes, channel bit lengths, disk structures, time required for forming recording and erase patterns, recording powers, and the like. In the optical recording medium, erase pattern information about power levels of start and last pulses of an erase pattern for erasing data is recorded in a reproducible only pre-recorded area or rewritable area in/from which data is rewritten/reproduced. Hereinafter, for convenience, it is described that the erase pattern information is stored in the pre-recorded area.

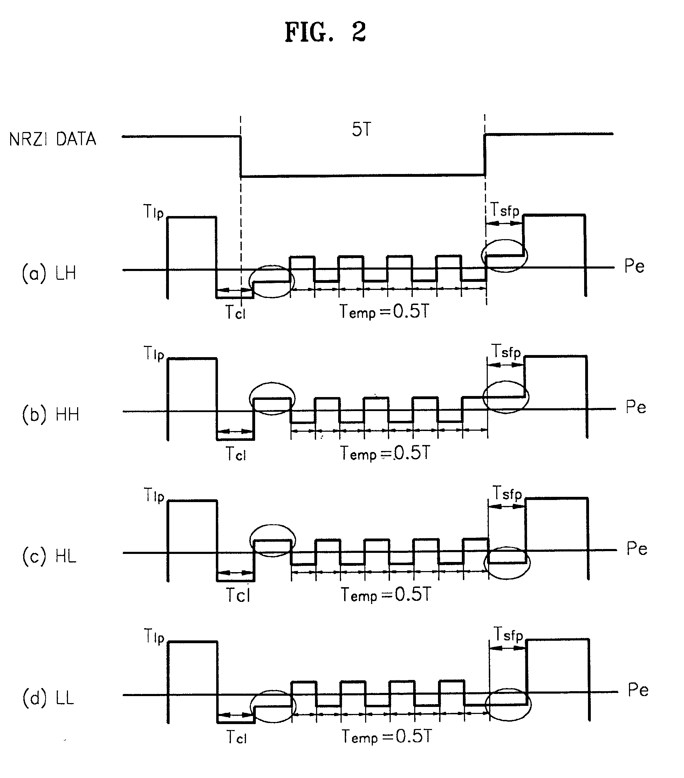

A combination of power levels of start and last pulses of an erase pattern for erasing data recorded in an optical disk can be classified into four types according to kinds of recording layers of disks or kinds of disks, as shown in Figure 2.

Referring to Figure 2, an erase pattern is classified into four types: (a) LH, (b) HH, (c) HL, and (d) LL. Each erase pattern is marked with a circle for easy identification of the differences. (a) LH represents that power of a start pulse constituting the erase pattern is equal to a low level P_{BE} of a subsequent erase multi-pulse, a last erase multi-pulse constituting the erase pattern is ended at the low level P_{BE}, and power level of a last pulse Tsfp of a subsequent erase pattern is equal to a high level P_{PE} of the erase multi-pulse. (b) HH represents that power of a start pulse constituting the erase pattern is equal to the high level P_{PE} of a subsequent erase multi-pulse, a last erase multi-pulse constituting the erase pattern is ended at the high level P_{PE}, and level of a last pulse Tsfp of a subsequent erase pattern is maintained at the high level P_{PE} of the erase multi-pulse. (c) HL represents that power of a start pulse constituting the erase pattern is equal to the high level P_{PE} of a subsequent erase multi-pulse, a last erase multi-pulse constituting the erase pattern is ended at the high level P_{PE}, and the level of a last pulse Tsfp of a subsequent erase pattern is equal to the low level P_{BE} of the erase multi-pulse. Finally, (d) LL represents that power of a start pulse constituting the erase pattern is equal to the low level P_{BE} of a subsequent erase multi-pulse, a last erase multi-pulse constituting the erase pattern is ended at the low level P_{BE}, and level of a last pulse Tsfp of a subsequent erase pattern is maintained at the low level P_{BE} of the erase multi-pulse.

When an optical recording medium where start and last pulses of an erase pattern that can be differently set depending on kinds of recording layers of disks, kinds of disks, or each layer of a multi-layered recording layer are recorded in a reproducible only area is inserted into a recording apparatus, the recording apparatus does not need to perform an additional test for selecting an optimal erase power. Thus, the time required for determining an erase power level can be considerably reduced.

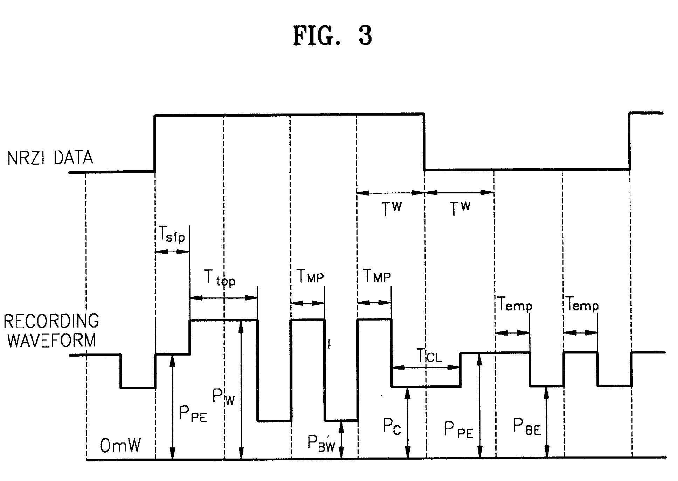

Figure 3 is a view of an example of a recording waveform for recording data in a data zone of the optical recording medium shown in Figure 1. In Figure 3, horizontal quantities represent times of recording and erasing patterns while vertical quantities represent recording powers.

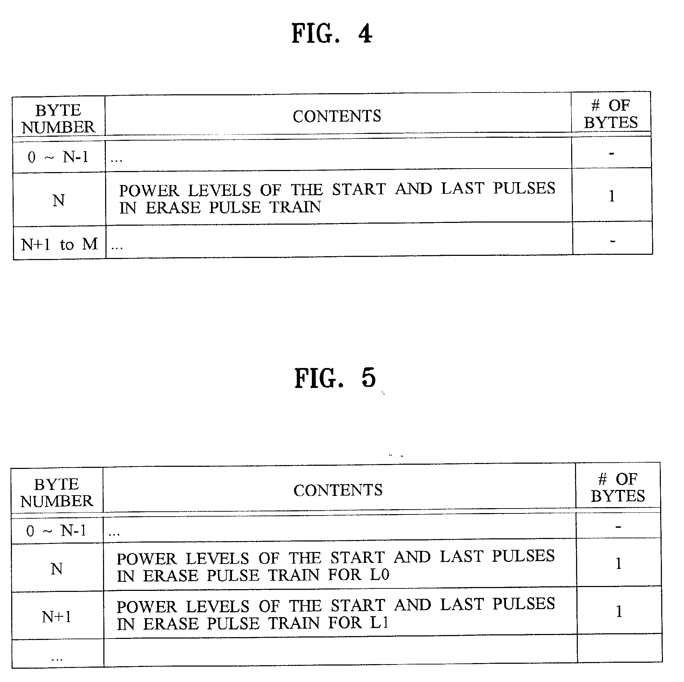

Figure 4 is a view of an example of data recorded in the pre-recorded area shown in Figure 1. Referring to Figure 4, in the pre-recorded area, besides the times required for forming recording and erase patterns of the waveform shown in Figure 3, recording power, kinds of disks, sizes of disks, and the like can be recorded. Also, the pre-recorded area includes reserved bytes that are not assigned for recording. Information about power levels of start and last pulses of the erase pattern can be recorded in one of the reserved bytes. In Figure 4, byte number (BN) N was assigned for recording information about the power levels of the start and last pulses of the erase pattern. In detail, the power level of the start pulse of the erase pattern can be defined as high 4 bits, and the power level of the last pulse can be defined as low 4 bits. If the low level P_{BE} of an erase multi-pulse is defined as "0001" and the high level P_{PE} of the erase multi-pulse is defined as "0000", in the case of the erase pattern shown in Figure 3, "00010000" is recorded in BN N. The recording apparatus reads "00010000" recorded in BN N of the optical disk that is inserted therein, and thus can identify that the power level of the start pulse of the erase pattern is P_{BE} and the power level of the last pulse is P_{PE} without an additional test procedure. In Figure 4, M represents a last byte in an area storing disk information.

Figure 5 is a view of an example of data recorded in the pre-recorded area shown in Figure 1 when the optical recording medium is a dual layer optical recording medium. Referring to Figure 5, BN N is assigned for recording erase pattern information about power levels of start and last pulses of an erase pattern for a first recording layer L0. BN N+1 is assigned for recording erase pattern information about power levels of start and last pulses of an erase pattern for a second recording layer L1. The power level of the start pulse of the erase pattern is defined as high 4 bits of each of BN N and N+1, and the power level of the last pulse is defined as low 4 bits.

In Figure 5, even though erase pattern information of two recording layers are recorded in one recording layer, erase pattern information corresponding to each recording layer can be recorded in each of the two recording layers. As described above, in the optical recording medium on which information about powers of an erase pattern is recorded, start and last pulses of the erase pattern that can be differently set depending on kinds of recording layers of disks, kinds of disks, or each layer of a multi-layered recording layer are recorded in a reproducible only area of the optical recording medium. Thus, the time required for selecting an optimal erase power for the optical recording medium in which the recording apparatus is inserted can be considerably reduced.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An optical recording medium which allows data to be recorded on, erased from, and reproduced from, the optical recording medium in which erase pattern information including information about power levels of start and last pulses of an erase pattern for erasing data is recorded.

2. The optical recording medium of claim 1, wherein the erase pattern information is recorded in a reproducible only area of a recording layer on which data is recorded.

3. The optical recording medium of claim 1, wherein the erase pattern information is recorded in a recordable area of the recording layer on which data is recorded.

4. The optical recording medium of claim 1, wherein the power level of the start pulse of the erase pattern is a high level of a unit pulse string and the power level of the last pulse of the erase pattern is the high level of the unit pulse string.

5. The optical recording medium of claim 1, wherein the power level of the start pulse of the erase pattern is a low level of the unit pulse string and the power level of the last pulse of the erase pattern is the low level of the unit pulse string.

6. The optical recording medium of claim 1, wherein the power level of the start pulse of the erase pattern is a high level of a unit pulse string and the power level of the last pulse of the erase pattern is a low level of the unit pulse string.

7. The optical recording medium of claim 1, wherein the power level of the start pulse of the erase pattern is a low level of a unit pulse string and the power level of the last pulse of the erase pattern is a high level of the unit pulse string.

8. An optical recording medium which allows data to be recorded on, erased from, and reproduced from, the optical recording medium comprising:
a plurality of recording layers on which data including erase pattern information is recorded, wherein the erase pattern information includes information about power levels of start and last pulses of an erase pattern for erasing data corresponding to each of the recording layers.

9. The optical recording medium of claim 8, wherein the erase pattern information about each of the plurality of recording layers is stored in one layer selected from the plurality of recording layers.

10. The optical recording medium of claim 9, wherein the erase pattern information is recorded in a reproducible only area of the selected recording layer.

11. The optical recording medium of claim 9, wherein the erase pattern information is recorded in a recordable area of the selected recording layer.

12. The optical recording medium of claim 9, wherein the power level of the start pulse of the erase pattern is a high level of a unit pulse string and the power level of the last pulse of the erase pattern is the high level of the unit pulse string.

13. The optical recording medium of claim 9, wherein the power level of the start pulse of the erase pattern is a low level of a unit pulse string and the power level of the last pulse of the erase pattern is the low level of the unit pulse string.

14. The optical recording medium of claim 9, wherein the power level of the start pulse of the erase pattern is a high level of a unit pulse string and the power level of the last pulse of the erase pattern is a low level of the unit pulse string.

15. The optical recording medium of claim 9, wherein the power level of the start pulse of the erase pattern is a low level of a unit pulse string and the power level of the last pulse of the erase pattern is a high level of the unit pulse string.

16. The optical recording medium of claim 8, wherein the erase pattern information about each of the plurality of recording layers is respectively recorded on each corresponding recording layer.

17. The optical recording medium of claim 16, wherein the erase pattern information about the plurality of recording layers is respectively recorded in reproducible only areas of each of the recording layers.

18. The optical recording medium of claim 16, wherein the erase pattern information about the plurality of recording layers is respectively recorded in recordable areas of each of the recording layers.

19. The optical recording medium of claim 16, wherein the power level of the start pulse of the erase pattern is a high level of a unit pulse string and the power level of the last pulse of the erase pattern is the high level of the unit pulse string.

20. The optical recording medium of claim 16, wherein the power level of the start pulse of the erase pattern is a low level of a unit pulse string and the power level of the last pulse of the erase pattern is the low level of the unit pulse string.

21. The optical recording medium of claim 16, wherein the power level of the start pulse of the erase pattern is a high level of a unit pulse string and the power level of the last pulse of the erase pattern is a low level of the unit pulse string.

22. The optical recording medium of claim 16, wherein the power level of the start pulse of the erase pattern is a low level of a unit pulse string and the power level of the last pulse of the erase pattern is a high level of the unit pulse string.
